# EUROPEAN PATENT SPECIFICATION

(11) **EP 3 364 087 B1**
(45) Date of publication and mention of the grant of the patent: **02.09.2020**
(21) Application number: 17185446.6
(22) Date of filing: 09.08.2017
(51) Int. Cl.: F16L 29/02, F16L 19/00, E04H 15/20

(54) **A CONNECTOR FOR INFLATABLE BRACKETS FOR TENTS**
HALTERUNGS-VERBINDERANORDNUNG FÜR AUFBLASBARE STÄBE FÜR ZELTE
ENSEMBLE CONNECTEUR DE SUPPORT POUR DES ELEMENTS GONFLABLE POUR DES TENTS

(30) Priority: 15.02.2017 CN 201720136640 U
(43) Date of publication of application: 22.08.2018
(73) Proprietor: Hui Zhou Win Merchant Tour Products Co., Ltd., Huizhou City, Guangdong (CN)
(72) Inventor: CAO, Wei, Huizhou City,, Guangdong (CN)
(74) Representative: Cabinet Chaillot

(56) References cited:
- WO-A1-2013/019741
- WO-A1-2014/008839
- DE-U1-202016 101 349
- DE-U1-202016 104 291
- US-A- 2 775 471

## Description

### TECHNICAL FIELD

The present invention relates to a connector assembly, and in particular, relates to a connector assembly for inflatable brackets with a blocking switch.

### BACKGROUND

An inflatable tent and an inflatable awning is a large-size inflatable, and is constituted by inflatable brackets and shade cloth. Since the inflatable may be simply damages and thus air leaks, the inflatable bracket is generally manufactured into a section-type inflatable structure, and then the inflatable brackets are communicated with each other via a connector assembly for inflatable brackets. However, the connector assembly for inflatable brackets in the prior art has no blocking switch. In this way, once one section of inflatable bracket leaks, the communication between the leaking inflatable bracket with other inflatable brackets may not be cut off, and thus the air volume in the other inflatable brackets is insufficient. In addition, it is inconvenient to replace the leaking inflatable bracket. De202016104291U1 and DE202016101349U1 disclose connector assemblies for inflatable brackets according to the state of the art used in tents.

### SUMMARY OF THE INVENTION

The present invention is intended to provide a connector assembly for inflatable brackets with blocking switch, in order to cut off or conduct an air passage between different inflatables.

To achieve the above objective, the present invention provides a connector assembly for inflatable brackets according to claim 1 with blocking switch, comprising at least one tube body and a blocking switch, wherein the tube body is connected to the blocking switch.

Further, the connector assembly for inflatable brackets further comprises a connector, wherein the connector is arranged at one or two ends where the tube body is connected to the blocking switch.

Further, the number of the at least one tube body is two, a first tube body and a second tube body, the blocking switch is arranged between the first tube body and the second tube body, and the connector and the blocking switch are independently arranged at two ends of the same tube body.

Further, the blocking switch comprises a switch body, a first fastening rotary cap and a second fastening rotary cap, wherein the switch body is provided with a first interface configured to be connected to the first tube body and a second interface configured to be connected to the second tube body, a first fastening thread is arranged on a periphery of a lower part of the first interface and a second fastening thread is arranged on a periphery of a lower part of the second interface, the first fastening rotary cap is sleeved onto the first tube body and the first fastening thread, and the second fastening rotary cap is sleeved onto the second tube body and the second fastening thread.

Further, the switch body comprises a plug fixing seat and a movable plug, the first interface and the first fastening thread are arranged at one end of the plug fixing seat, and the other end of the plug fixing seat is provided with a receiving chamber for receiving the movable plug, the movable plug comprises a plug body, an air chamber, an air port, a receiving chamber sealer and a first interface sealer, the air chamber is arranged in the plug body, one end of the air chamber is connected to the second interface and the other end of the air chamber is connected to the air port, the air port is arranged between the receiving chamber sealer and the first interface sealer, the first interface sealer has a diameter less than that of the receiving chamber sealer, the first interface sealer is configured to seal the first interface, and the receiving chamber sealer is configured to seal a gap between the plug body and the receiving chamber; the second interface is inserted within a gap between the receiving chamber and the movable plug, the movable plug is provided with a second interface sealer configured to be connected to the second interface, the plug fixing seat is provided with a rotation-preventing rib, and the rotation-preventing rib causes the second interface not to rotate with respect to the plug fixing seat.

Further, not forming part of the invention, the switch body further comprises a projecting linkage switch, wherein the linkage switch is arranged on the plug body between the second interface and the receiving chamber sealer, and the receiving chamber is provided with an escaping seat for movement of the linkage switch.

Further, not forming part of the invention, the switch body further comprises a rotary cap and a plug fastening cap, wherein the rotary cap is provided with a linkage portion mating with the linkage switch, a third fastening thread is arranged at an edge of the receiving chamber, the rotary cap is sleeved onto the plug fixing seat, and the plug fastening cap is sleeved onto the movable plug and the third fastening thread; a rotation-limiting groove is provided on the plug fixing seat, a rotation-limiting convex rib mating with the rotation-limiting groove is provided within the rotary cap, and the rotation-limiting groove and the rotation-limiting convex rib mate to limit a rotation range of the rotary cap.

Further, not forming part of the invention, the linkage portion is an inclined projecting bar, and the linkage switch is a gear meshing with the projecting bar.

Further, not forming part of the invention, the tube body is a thermoplastic polyurethane elastomer tube.

Further, not forming part of the invention, the connector assembly for inflatable bracket further comprises a spring, wherein the spring is arranged in the tube body.

According to the present invention according to claim 1, an air blocking switch is arranged in the middle of the tube body of the connector assembly for inflatable brackets, such that cut-off or conduction of the air passage between different inflatables is controlled. In this way, with respect to a tent constituted by a plurality of sections of inflatable brackets, once one section of inflatable bracket leaks, linkage between the inflatable bracket and the other inflatable brackets may be simply and quickly cut off, and the leaking inflatable bracket may be replaced with a new inflatable bracket.

### BRIEF DESCRIPTION OF THE DRAWINGS

FIG. 1 is a schematic structural view of a connector assembly for inflatable brackets according to an embodiment of the present invention;
FIG. 2 is a first exploded view of FIG. 1;
FIG. 3 is a second exploded view of FIG. 1;
FIG. 4 is schematic structural view of a movable plug in FIG. 2;
FIG. 5 is a side view of FIG. 4;
FIG. 6 is a sectional view of FIG. 5;
FIG. 7 is a sectional view of a rotary cap in FIG. 2; and
FIG. 8 is a schematic structural view of a tube body in FIG. 1 according to an embodiment of the present invention.

Reference numerals and denotations thereof:
1-first tube body, 2-second tube body, 3-connector, 4-blocking switch, 41-first fastening rotary cap, 42-second fastening rotary cap, 43-switch body, 431-plug fixing seat, 432-second interface, 433-second fastening thread, 434-movable plug, 4341-plug body, 4342-air chamber, 4343-air port, 4344-receiving chamber sealer, 4345-first interface sealer, 4346-linkage switch, 4347-second interface sealer, 435-rotary cap, 4351-linkage portion, 436-plug fastening cap, and 5-spring.

### DETAILED DESCRIPTION

It should be understood that the embodiments described here are only exemplary ones for illustrating the present invention, and are not intended to limit the present invention, as defined by the appended claims.

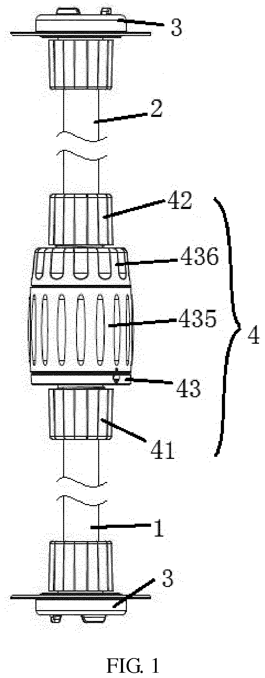

The present invention provides a connector assembly for inflatable brackets with a blocking switch. Referring to FIG. 1, in a first embodiment, the connector assembly for inflatable brackets comprises a first tube body, a blocking switch 4 and a connector 3, wherein the tube body is connected to the blocking switch, and the connector is arranged at one or two ends where the tube body is connected to the blocking switch.

During use, the connector assembly for inflatable brackets may be used as a portion of one section of inflatable bracket. As such a connector may be arranged. When the connector is arranged on the tube body, the blocking switch is fixedly connected to the inflatable bracket (which may not be disassembled, and are, for example, connected to each other via an adhesive). The connector is connected to a connection interface of the other section of inflatable bracket. Two sections of inflatable brackets may be conducted or cut off by controlling the blocking switch between two tube bodies. When the connector is arranged on the connector assembly, the tube body is fixedly connected to the inflatable bracket (which may not be disassembled, and are, for example, connected to each other via an adhesive), and the other practice is the same as described above. When the connector assembly for inflatable brackets is used as an independent part, connectors need to be arranged at two ends thereof for connection to the connection interface of the inflatable brackets.

Referring to FIG. 1, in a second embodiment, the connector assembly for inflatable brackets comprises a first tube body 1, a second tube body 2, a connector 3 and a blocking switch 4, wherein the blocking switch is connected to the first tube body and the second tube body, and the connector and the blocking switch are independently arranged at two ends of the same tube body.

During use, the connector assembly for inflatable brackets may be used as a portion of one section of inflatable bracket. As such, a connector may be arranged, and the connector is connected to a connection interface of the other section of inflatable bracket. Two sections of inflatable brackets may be conducted or cut off by controlling the blocking switch between two tube bodies. When the connector assembly for inflatable brackets is used as an independent part, connectors need to be arranged at two ends thereof for connection to the connection interface of the inflatable brackets.

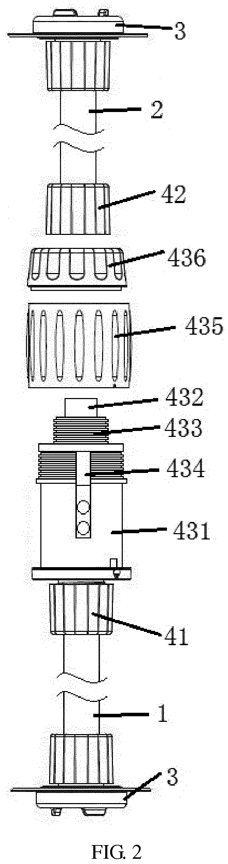

Referring to FIG. 2, based on the second embodiment, in a third embodiment, the blocking switch comprises a switch body 43, a first fastening rotary cap 41 and a second fastening rotary cap 42, wherein the switch body is provided with a first interface configured to be connected to the first tube body and a second interface 432 configured to be connected to the second tube body, a first fastening thread is arranged on a periphery of a lower part of the first interface and a second fastening thread 433 is arranged on a periphery of a lower part of the second interface, the first fastening rotary cap is sleeved onto the first tube body and the first fastening thread, and the second fastening rotary cap is sleeved onto the second tube body and the second fastening thread.

This embodiment discloses a connection and fixing manner of the blocking switch and the two tube bodies. During use, the tube body is firstly made to pass through the fastening rotary cap and then made to be sleeved to the interface, and then the fastening rotary cap is threaded into the fastening thread.

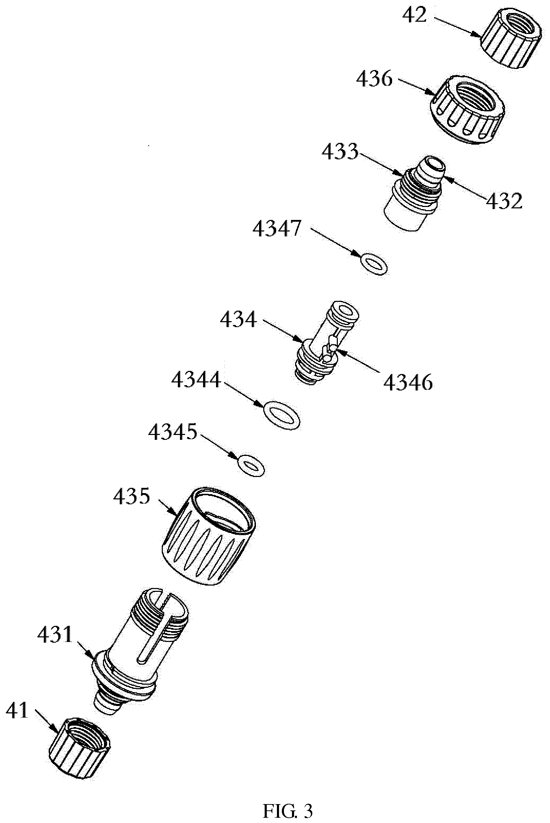

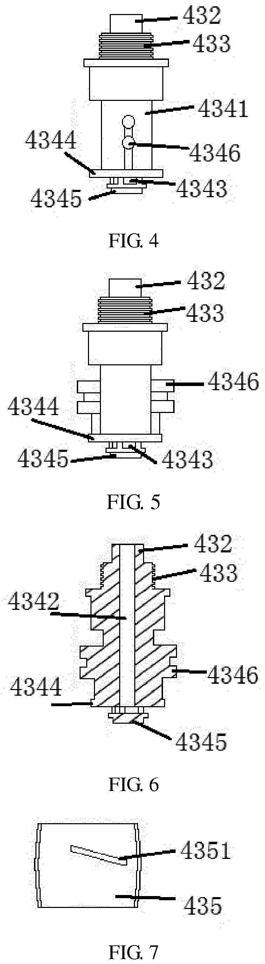

Referring to FIGS. 2 to 6, based on the third embodiment, in a fourth embodiment, the switch body comprises a plug fixing seat 431 and a movable plug 434, the first interface and the first fastening thread are arranged at one end of the plug fixing seat, and the other end of the plug fixing seat is provided with a receiving chamber for receiving the movable plug, the movable plug comprises a plug body 4341, an air chamber 4342, an air port 4343, a receiving chamber sealer 4344 and a first interface sealer 4345, the air chamber is arranged in the plug body, one end of the air chamber is connected to the second interface and the other end of the air chamber is connected to the air port, the air port is arranged between the receiving chamber sealer and the first interface sealer, the first interface sealer has a diameter less than that of the receiving chamber sealer, the first interface sealer is configured to seal the first interface, and the receiving chamber sealer is configured to seal a gap between the plug body and the receiving chamber; the second interface is inserted within a gap between the receiving chamber and the movable plug, the movable plug is provided with a second interface sealer 4347 configured to be connected to the second interface, the plug fixing seat is provided with a rotation-preventing rib, and the rotation-preventing rib causes the second interface not to rotate with respect to the plug fixing seat, preventing the second fastening rotary cap from driving the second interface to rotate and thereby causing the plug fastening cap to be disassembled with the second fastening rotary cap when the second fastening rotary cap is disassembled.

This embodiment discloses a plug-type air switch. When the air in one inflatable bracket need to be blocked with the air in another inflatable bracket, the movable plug is arranged in the innermost of the plug fixing seat. In this case, the first interface sealer is tightly attached to the first interface to block the air between the two inflatable brackets. When the air in one inflatable bracket needs to communicate with the air in another inflatable bracket, the movable plug is loosed outwards. In this case, the first interface sealer is detached from the first interface, and the air in the inflatable bracket connected to the first interface flows into the receiving chamber of the movable plug. However, due to the presence of the receiving chamber sealer, the air may not flow to the external space, but flows from the air port to the air chamber and then flows to the inflatable bracket connected to the second interface; and on the contrary, the gas in the inflatable bracket connected to the second interface may also flow into the inflatable bracket connected to the first interface.

Based on the fourth embodiment, in a fifth embodiment, the switch body further comprises a projecting linkage switch 4346, wherein the linkage switch is arranged on the plug body between the second interface and the receiving chamber sealer, and the receiving chamber is provided with an escaping seat for movement of the linkage switch.

This embodiment discloses an arrangement position of the linkage switch of the movable plug.

Based on the fifth embodiment, in a sixth embodiment, the switch body further comprises a rotary cap 435 and a plug fastening cap 436, wherein the rotary cap is provided with a linkage portion 4351 mating with the linkage switch, a third fastening thread is arranged at an edge of the receiving chamber, the rotary cap is sleeved onto the plug fixing seat, and the plug fastening cap is sleeved onto the movable plug and the third fastening thread; a rotation-limiting groove is provided on the plug fixing seat, a rotation-limiting convex rib mating with the rotation-limiting groove is provided within the rotary cap, and the rotation-limiting groove and the rotation-limiting convex rib mate to limit a rotation range of the rotary cap. For example, the rotation-limiting groove is a continuous incomplete ring body provided on the plug fixing seat. If the ring body has a distribution angle of 270°, a rotary angle of the rotary cap where the rotation-limiting groove is provided is 90°.

This embodiment discloses a manner of fixing the movable plug. Specifically, the movable plug is firstly sleeved to the plug fixing seat, and then the plug fastening cap is sleeved to the movable plug and then screwed into the third fastening thread. In this way, the movable plug and the rotary cap may be fixed between the plug fixing seat and the plug fastening cap.

Referring to FIGS. 2 to 7, based on the sixth embodiment, in a seventh embodiment, the linkage portion is an inclined projecting bar (which may be considered as a section of a thread line), and the linkage portion is a gear meshing with the projecting bar. The above shapes of the linkage portion and the linkage switch may also be inversely arranged.

This embodiment provides a linkage manner of the movable plug. Based on the principle of the thread line, a horizontal pushing force is transformed into a longitudinal pushing force, which accommodates the shape of the connector assembly during use, and optimizes the user experience.

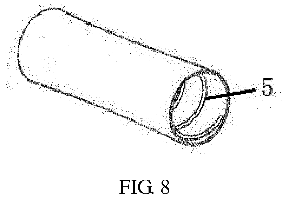

Referring to FIG. 8, based on the above embodiments, in an eighth embodiment, the tube body is a thermoplastic polyurethane elastomer tube, and a spring 5 is arranged in the tube body.

The thermoplastic polyurethane elastomer is also referred to as a thermoplastic polyurethane rubber, which is abbreviated as TPU, and is an elastomer. The TPU has excellent properties such as high strength, high toughness, abrasion-resistance and the like, and has the advantage of good manufacture property. In addition, arranging a spring in the tube body not only increases the pressure-resistance of the tube body, but also ensures the use effect of the connector assembly for inflatable brackets. Further, with the spring, the tube may be restored to its original shape under the elastic force produced by deformation of the spring.

## Claims

1. A connector assembly for inflatable brackets for tents or awnings , wherein the connector assembly comprises an air blocking switch (4) and two tube bodies (1, 2), each connected to the air blocking switch (4), the connector assembly further comprises connector (3) at each end of the tube bodies (1, 2) which is not connected to the blocking switch (4), wherein the air blocking switch (4) comprises a switch body (43), a first fastening rotary cap (41) and a second fastening rotary cap (42), wherein the switch body (43) is provided with a first interface configured to be connected to the first tube body (1) and a second interface (432) configured to be connected to the second tube body (2 ), a first fastening thread is arranged on a periphery of a part of the first interface and a second fastening thread (433) is arranged on a periphery of a part of the second interface, the first fastening rotary cap (41) is sleeved onto the first tube body (1) and the first fastening thread, and the second fastening rotary cap (42) is sleeved onto the second tube body (2) and the second fastening thread (433), **characterized in that** the switch body (43) comprises a plug fixing seat (431) and a movable plug (434), the first interface and the first fastening thread are arranged at one end of the plug fixing seat (431), and the other end of the plug fixing seat (431) is provided with a receiving chamber for receiving the movable plug (434), the movable plug (434) comprises a plug body (4341), an air chamber (4342), an air port (4343), a receiving chamber sealer (4344) and a first interface sealer (4345), the air chamber (4342) is arranged in the plug body (4341), one end of the air chamber (4342) is connected to the second interface and the other end of the air chamber is connected to the air port (4343), the air port (4343) is arranged between the receiving chamber sealer (4344) and the first interface sealer (4345), the first interface sealer (4345) has a diameter less than that of the receiving chamber sealer (4344), the first interface sealer (4345) is configured to seal the first interface, and the receiving chamber sealer (4344) is configured to seal a gap between the plug body (4341) and the receiving chamber; the second interface is inserted within a gap between the receiving chamber and the movable plug (434), the movable plug (434) is provided with a second interface sealer (4347) configured to be connected to the second interface, the plug fixing seat (431) is provided with a rotation-preventing rib, and the rotation-preventing rib causes the second interface not to rotate with respect to the plug fixing seat (431).

2. The connector assembly according to claim 1, wherein the switch body (43) further comprises a projecting linkage switch (4346), wherein the linkage switch (4346) is arranged on the plug body (4341) between the second interface and the receiving chamber sealer (4344), and the receiving chamber is provided with an escaping seat for movement of the linkage switch (4346).

3. The connector assembly according to claim 2, wherein the switch body (43) further comprises a rotary cap (435) and a plug fastening cap (436), wherein the rotary cap (435) is provided with a linkage portion (4351) mating with the linkage switch (4346), a third fastening thread is arranged at an edge of the receiving chamber, the rotary cap (435) is sleeved onto the plug fixing seat (431), and the plug fastening cap (436) is sleeved onto the movable plug (434) and the third fastening thread; a rotation-limiting groove is provided on the plug fixing seat (431), a rotation-limiting convex rib mating with the rotation-limiting groove is provided within the rotary cap (435), and the rotation-limiting groove and the rotation-limiting convex rib mate to limit a rotation range of the rotary cap (435).

4. The connector assembly according to claim 3, wherein the linkage portion (4351) is an inclined projecting bar, and the linkage switch (4346) is a gear meshing with the projecting bar.

5. The connector assembly according to claim 1, wherein the two tube bodies (1, 2) are thermoplastic polyurethane elastomer tubes.

6. The connector assembly according to claim 1, wherein a spring (5) is arranged in the tube bodies body (1,2).

## Patentansprüche

1. Verbinderanordnung für aufblasbare Stäbe für Zelte oder Markisen, wobei die Verbinderanordnung einen Luftblockierschalter (4) und zwei Rohrkörper (1, 2) umfasst, die jeweils mit dem Luftblockierschalter (4) verbunden sind, wobei die Verbinderanordnung weiter einen Verbinder (3) an jedem Ende der Rohrkörper (1, 2) umfasst, der nicht mit dem Luftblockierschalter (4) verbunden ist, wobei der Luftblockierschalter (4) einen Schaltkörper (43), eine erste Drehbefestigungskappe (41) und eine zweite Drehbefestigungskappe (42) umfasst, wobei der Schaltkörper (43) mit einer ersten Schnittstelle ausgestattet ist, die konfiguriert ist, um mit dem ersten Rohrkörper (1) verbunden zu sein, und eine zweite Schnittstelle (432), die konfiguriert ist, um mit dem zweiten Rohrkörper (2) verbunden zu sein, ein erstes Befestigungsgewinde auf einem Umfang eines Teils der ersten Schnittstelle angeordnet ist, ein zweites Befestigungsgewinde (433) auf einem Umfang eines Teils der zweiten Schnittstelle angeordnet ist, die erste Drehbefestigungskappe (41) über den ersten Rohrkörper (1) und das erste Befestigungsgewinde geschoben ist, und die zweite Drehbefestigungskappe (42) über den zweiten Rohrkörper (2) und das zweite Befestigungsgewinde (433) geschoben ist, **dadurch gekennzeichnet, dass** der Schaltkörper (43) einen Steckbefestigungssitz (431) und einen beweglichen Stecker (434) umfasst, die erste Schnittstelle und das erste Befestigungsgewinde an einem Ende des Steckbefestigungssitzes (431) angeordnet sind und das andere Ende des Steckbefestigungssitzes (431) mit einer Aufnahmekammer ausgestattet ist, um den beweglichen Stecker (434) aufzunehmen, der bewegliche Stecker (434) einen Steckerkörper (4341), eine Luftkammer (4342), einen Luftanschluss (4343), eine Aufnahmekammerabdichtung (4344) und eine erste Schnittstellenabdichtung (4345) umfasst, die Luftkammer (4342) im Steckerkörper (4341) angeordnet ist, ein Ende der Luftkammer (4342) mit der zweiten Schnittstelle verbunden ist und das andere Ende der Luftkammer mit dem Luftanschluss (4343) verbunden ist, der Luftanschluss (4343) zwischen der Aufnahmekammerabdichtung (4344) und der ersten Schnittstellenabdichtung (4345) angeordnet ist, die erste Schnittstellenabdichtung (4345) einen Durchmesser aufweist, der kleiner als derjenige der Aufnahmekammerabdichtung (4344) ist, die erste Schnittstellenabdichtung (4345) konfiguriert ist, um die erste Schnittstelle abzudichten, und die Aufnahmekammerabdichtung (4344) konfiguriert ist, um einen Zwischenraum zwischen dem Steckerkörper (4341) und der Aufnahmekammer abzudichten; die zweite Schnittstelle in einen Zwischenraum zwischen der Aufnahmekammer und dem beweglichen Stecker (434) eingeführt ist, der bewegliche Stecker (434) mit einer zweiten Schnittstellenabdichtung (4347) ausgestattet ist, die konfiguriert ist, um mit der zweiten Schnittstelle verbunden zu sein, der Steckerbefestigungssitz (431) mit einer Drehungsverhindernden Rippe ausgestattet ist und die Drehungsverhindernde Rippe verursacht, dass sich die zweite Schnittstelle nicht mit Bezug auf den Steckerbefestigungssitz (431) dreht.

2. Verbinderanordnung nach Anspruch 1, wobei der Schaltkörper (43) weiter einen vorspringenden Kupplungsschalter (4346) umfasst, wobei der Kupplungsschalter (4346) auf dem Steckerkörper (4341) zwischen der zweiten Schnittstelle und der Aufnahmekammerabdichtung (4344) angeordnet ist und die Aufnahmekammer mit einem hervorstehenden Sitz für die Bewegung des Kupplungsschalters (4346) ausgestattet ist.

3. Verbinderanordnung nach Anspruch 2, wobei der Schaltkörper (43) weiter eine Drehkappe (435) und eine Steckerbefestigungskappe (436) umfasst, wobei die Drehkappe (435) mit einem Kupplungsabschnitt (4351) ausgestattet ist, der zum Kupplungsschalter (4346) passt, ein drittes Befestigungsgewinde an einer Kante der Aufnahmekammer angeordnet ist, die Drehkappe (435) über den Steckerbefestigungssitz (431) geschoben ist und die Steckerbefestigungskappe (436) über den beweglichen Stecker (434) und das dritte Befestigungsgewinde geschoben ist; eine Drehungs-begrenzede Nut auf dem Steckerbefestigungssitz (431) bereitgestellt ist, eine Drehungs-begrenzede konvexe Rippe, die zur Drehungsbegrenzenden Nut passt, innerhalb der Drehkappe (435) bereitgestellt ist, und die Drehungs-begrenzende Nut und die Drehungs-begrenzede konvexe Rippe zusammenpassen, um einen Drehbereich der Drehkappe (435) zu begrenzen.

4. Verbinderanordnung nach Anspruch 3, wobei der Kupplungsabschnitt (4351) eine geneigte Projektionsstange ist und der Kupplungsschalter (4346) ein Zahneingriff mit der Projektionsstange ist.

5. Verbinderanordnung nach Anspruch 1, wobei die zwei Rohrkörper Rohre (1, 2) aus thermoplastischem Polyurethanelastomer sind.

6. Verbinderanordnung nach Anspruch 1, wobei eine Feder (5) in den Rohrkörpern (1, 2) angeordnet ist.

## Revendications

1. Ensemble connecteur pour supports gonflables pour des tentes ou auvents, l'ensemble connecteur comprenant un commutateur de blocage d'air (4) et deux corps de tube (1, 2) reliés chacun au commutateur de blocage d'air (4), l'ensemble connecteur comprenant en outre un connecteur (3) à chaque extrémité des corps de tube (1, 2) qui n'est pas reliée au commutateur de blocage (4), le commutateur de blocage d'air (4) comprenant un corps de commutateur (43), un premier capuchon rotatif de fixation (41) et un second capuchon rotatif de fixation (42), le corps de commutateur (43) comportant une première interface configurée pour être reliée au premier corps de tube (1) et une seconde interface (432) configurée pour être reliée au second corps de tube (2), un premier filetage de fixation étant disposé sur une périphérie d'une partie de la première interface et un deuxième filetage de fixation (433) étant disposé sur une périphérie d'une partie de la seconde interface, le premier capuchon rotatif de fixation (41) étant emmanché sur le premier corps de tube (1) et le premier filetage de fixation, et le second capuchon rotatif de fixation (42) étant emmanché sur le second corps de tube (2) et le deuxième filetage de fixation (433), **caractérisé par le fait que** le corps de commutateur (43) comprend un siège de fixation de tampon (431) et un tampon mobile (434), la première interface et le premier filetage de fixation sont disposés à une extrémité du siège de fixation de tampon (431), et l'autre extrémité du siège de fixation de tampon (431) comporte une chambre de réception pour recevoir le tampon mobile (434), le tampon mobile (434) comprend un corps de tampon (4341), une chambre à air (4342), un orifice d'air (4343), un élément d'étanchéité de chambre de réception (4344) et un élément d'étanchéité de première interface (4345), la chambre à air (4342) est disposée dans le corps de bouchon (4341), une extrémité de la chambre à air (4342) est reliée à la seconde interface et l'autre extrémité de la chambre à air est reliée à l'orifice d'air (4343), l'orifice d'air (4343) est disposé entre l'élément d'étanchéité de chambre de réception (4344) et l'élément d'étanchéité de première interface (4345), l'élément d'étanchéité de première interface (4345) a un diamètre inférieur à celui de l'élément d'étanchéité de chambre de réception (4344), l'élément d'étanchéité de première interface (4345) est configuré pour sceller la première interface, et l'élément d'étanchéité de chambre de réception (4344) est configuré pour sceller un intervalle entre le corps de bouchon (4341) et la chambre de réception ; la seconde interface est introduite à l'intérieur d'un intervalle entre la chambre de réception et le tampon mobile (434), le tampon mobile (434) comporte un élément d'étanchéité de seconde interface (4347) configuré pour être relié à la seconde interface, le siège de fixation de tampon (431) comporte une nervure anti-rotation, et la nervure anti-rotation amène la seconde interface à ne pas tourner par rapport au siège de fixation de tampon (431).

2. Ensemble connecteur selon la revendication 1, dans lequel le corps de commutateur (43) comprend en outre un commutateur de liaison en saillie (4346), le commutateur de liaison (4346) est disposé sur le corps de tampon (4341) entre la seconde interface et l'élément d'étanchéité de chambre de réception (4344), et la chambre de réception comporte un siège de fuite pour un mouvement du commutateur de liaison (4346).

3. Ensemble connecteur selon la revendication 2, dans lequel le corps de commutateur (43) comprend en outre un capuchon rotatif (435) et un capuchon de fixation de tampon (436), le capuchon rotatif (435) comporte une partie de liaison (4351) s'accouplant au commutateur de liaison (4346), un troisième filetage de fixation est disposé à un bord de la chambre de réception, le capuchon rotatif (435) est emmanché sur le siège de fixation de tampon (431), et le capuchon de fixation de tampon (436) est emmanché sur le tampon mobile (434) et le troisième filetage de fixation ; une rainure de limitation de rotation est disposée sur le siège de fixation de tampon (431), une nervure convexe de limitation de rotation s'accouplant à la rainure de limitation de rotation est disposée à l'intérieur du capuchon rotatif (435), et la rainure de limitation de rotation et la nervure convexe de limitation de rotation s'accouplent pour limiter une plage de rotation du capuchon rotatif (435).

4. Ensemble connecteur selon la revendication 3, dans lequel la partie de liaison (4351) est une barre en saillie inclinée, et le commutateur de liaison (4346) est un engrenage s'engrenant avec la barre en saillie.

5. Ensemble connecteur selon la revendication 1, dans lequel les deux corps de tube (1, 2) sont des tubes en élastomère de polyuréthane thermoplastique.

6. Ensemble connecteur selon la revendication 1, dans lequel un ressort (5) est disposé dans les corps de tube (1, 2).
